# EUROPÄISCHE PATENTSCHRIFT

(11) **EP 1 267 072 B1**
(45) Veröffentlichungstag und Bekanntmachung des Hinweises auf die Patenterteilung: **27.06.2007**
(21) Anmeldenummer: 02011767.7
(22) Anmeldetag: 27.05.2002
(51) Int. Cl.: F03C 1/06

(54) **Hydrostatische Kolbenmaschine mit Stellungsrückmeldung**
Hydraulic machine with position feedback
Machine hydraulique avec retour de signal de position

(30) Priorität: 11.06.2001 DE 10128209
(43) Veröffentlichungstag der Anmeldung: 18.12.2002
(60) Teilanmeldung: 06021974.8
(73) Patentinhaber: Brueninghaus Hydromatik GmbH, 89275 Elchingen (DE)
(72) Erfinder: Stölzer, Rainer, 89231 Neu-Ulm (DE)
(74) Vertreter: Körfer, Thomas

(56) Entgegenhaltungen:
- GB-A- 990 054
- GB-A- 996 974
- US-A- 3 173 039

## Beschreibung

Die Erfindung betrifft eine hydrostatische Kolbenmaschine, insbesondere einen Hydromotor eines hydrostatisch angetriebenen Fahrzeugs.

Die Antriebseinheit eines hydrostatisch angetriebenen Fahrzeugs, wie beispielsweise einem Bagger, besteht aus einer als Pumpe arbeitenden hydrostatischen Kolbenmaschine, sowie einer als Hydromotor arbeitenden hydrostatischen Kolbenmaschine. Die als Pumpe arbeitende hydrostatische Kolbenmaschine wird von einem Antriebsmotor angetrieben. Der Antriebsmotor eines Fahrzeugs mit einem bezüglich eines Unterwagens drehbar angeordneten Oberwagens sowie die hydrostatische Kolbenmaschine, welche als Pumpe arbeitet, sind dabei zumeist in dem Oberwagen angeordnet. Der Oberwagen ist mit einer drehbaren Einrichtung auf einem Unterwagen fixiert. Die als Motor arbeitenden hydrostatischen Kolbenmaschinen, welche für den Fahrantrieb vorgesehen sind, sind in dem Unterwagen angeordnet. Die hydrostatischen Kolbenmaschinen des Ober- bzw. Unterwagens sind über ein Leitungssystem miteinander verbunden, über welches Arbeitsdrücke, Steuerdrücke und Tankdrücke übertragbar sind.

In dem Oberwagen ist ferner die elektrische Anlage angeordnet, durch welche beispielsweise die Drehzahl des Antriebsmotors geregelt wird oder Schaltventile zur Betätigung des Schaufelarmes gestellt werden. Die Energieversorgung der elektrischen Anlage wird durch einen an den Antriebsmotor angekoppelten Generator gewährleistet, durch den eine Batterie gespeist wird mit der die elektrischen Verbraucher über ein Netz von elektrischen Leitungen verbunden sind.

Die Steuerung und Regelung der im Unterwagen angeordneten hydrostatischen Kolbenmaschine, etwa zum Korrigieren der Fahrgeschwindigkeit, erfolgt ausschließlich über Steuerdrücke und hydraulisch betätigte Regelventile. Eine Durchführung von elektrischen Leitungen vom Oberwagen in den Unterwagen ist aufgrund der Möglichkeit, den Oberwagen unbegrenzt in eine beliebige Richtung drehen zu können, unmöglich. Ebenso ist eine Verbindung des Oberwagens mit dem Unterwagen durch Schleifkontakte in der Praxis wenig geeignet, da aufgrund der schwierigen Arbeitsbedingungen mit hoher Neigung zum Verschmutzen, bei denen Fahrzeuge der beschriebenen Art eingesetzt werden, eine Ausfallsicherheit nicht gewährleistet werden kann.

Aus der US 3,173,039 ist ein hydrostatisch angetriebener elektrischer Generator bekannt. Der Generator weist einen Stator auf, in dem zumindest eine elektrische Wicklung angeordnet ist. In dem Stator ist ein Rotor angeordnet, welcher drehfest mit einer Zylindertrommel verbunden ist. Der Rotor weist einen Magneten auf, der bei Rotation der Zylindertrommel in dem Stator ein sich änderndes Magnetfeld in der zumindest einen Wicklung des Stators induziert.

Der Erfindung liegt die Aufgabe zugrunde, mittels einer ohnehin vorhandenen hydrostatischen Kolbenmaschine in einem Unterwagen eines Baggers in einfacher Weise die Erzeugung elektrischer Energie zu ermöglichen.

Die Aufgabe wird durch die erfindungsgemäße hydrostatische Kolbenmaschine nach Anspruch 1 gelöst.

Durch die Anordnung von elektrisch leitfähigen Wicklungen im Inneren eines Gehäuses einer hydrostatischen Kolbenmaschine und zumindest eines permanentmagnetischen Körpers an einer im Betrieb rotierenden Zylindertrommel gemäß Anspruch 1 wird im Inneren der hydrostatischen Kolbenmaschine ein Generator geschaffen. Die Integration des Generators in die Kolbenmaschine erspart nicht nur zusätzlichen Bauraum durch die Anordnung eines externen Generators, sondern reduziert auch den konstruktiven Aufwand, da das Herausführen einer zusätzlichen Antriebswelle, zum Antrieb des externen Generators entfällt. Durch den integrierten Generator kann beispielsweise die Energie, die zum Betätigen von Regel- und Schaltventilen sowie Sensoren im Bereich der hydrostatischen Kolbenmaschine erforderlich ist in unmittelbarerer Nähe erzeugt werden, so daß eine aufwendige Verlegung von elektrischen Zuleitungen aus einer zentralen Versorgung entfällt. Durch die nur kurzen Leitungswege sinkt nicht nur der Installationsaufwand, sondern auch eine eventuelle Fehlersuche ist einfach möglich.

Die erfindungsgemäße hydrostatische Kolbenmaschine ermöglichtes, daß im Ober- bzw. im Unterwagen eines Fahrzeugs zwei abgeschlossene, miteinander kommunizierende Systeme angeordnet sind. Dadurch ist der Betrieb verschleißfrei möglich. Die problematische Durchführung der elektrischen Leitungen von dem Oberwagen in den Unterwagen entfällt. Damit wird nicht nur der Konstruktionsaufwand verringert, sondern auch die Betriebssicherheit der Anlage erhöht. Ein weiterer Vorteil ist es, Regelelektronik im Bereich des Unterwagens einzusetzen. Damit können einstellungssensible Bauteile, wie zum Beispiel Regelventile durch elektronische Lösungen ersetzt werden.

Neben den vielseitigen Möglichkeiten zur Erweiterung der Regelungstechnik im Unterwagen, bietet ein Überwachungssystem auch die Möglichkeit, die Funktion der im Unterwagen angeordneten Baugruppen zu überwachen. So kann beispielsweise der Fahrer über Temperatur, Drehzahl, Druck oder andere den Fahrzustand der Antriebseinheit betreffenden Größen informiert werden.

Durch die in den Unteransprüchen angeführten Maßnahmen sind vorteilhafte Weiterbildungen der hydrostatischen Kolbenmaschine möglich.

In der Zeichnung sind bevorzugte Ausführungsformen der hydrostatischen Kolbenmaschine vereinfacht dargestellt und in der nachfolgenden Beschreibung näher erläutert. Es zeigen:
- Fig. 1: eine schematische Darstellung eines hydrostatisch angetriebenen Fahrzeugs mit einem Ober- und einem Unterwagen;
- Fig. 2: einen Teilschnitt durch ein Ausführungsbeispiel einer erfindungsgemäßen hydrostatischen Kolbenmaschine;
- Fig. 3: einen Teilschnitt im Ausschnitt 3 der Fig. 2 durch eine erfindungsgemäße hydrostatische Kolbenmaschine; und
- Fig. 4: eine Schnittdarstellung entlang der Linie IV-IV der Fig. 3.

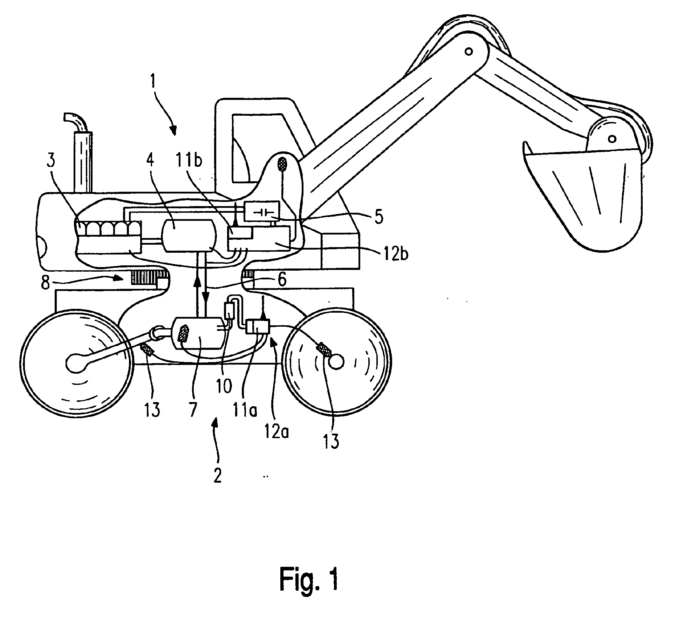

In Fig. 1 ist ein hydrostatisch angetriebenes Fahrzeug dargestellt, wobei in einem Teilaufriss die wesentlichen Komponenten des hydrostatischen Antriebs dargestellt sind. Das Fahrzeug weist einen Oberwagen 1 und einen Unterwagen 2 auf, welche drehbar miteinander verbunden sind. In dem Oberwagen 1 ist ein Antriebsmotor 3 angeordnet, welcher im Normalfall als Brennkraftmaschine ausgeführt ist. Die Abtriebswelle des Antriebsmotors 3 ist mit einer hydrostatischen Kolbenmaschine 4 verbunden. In dem Oberwagen 1 ist weiterhin eine elektrische Anlage 12b angeordnet, welche von einer Batterie 5 mit elektrischer Energie versorgt wird. Die Batterie 5 wird durch einen nicht dargestellten Generator, der von dem Antriebsmotor 3 angetrieben wird, gespeist. In der Zeichnung ist die elektrische Anlage 12b als Einheit zusammengefaßt dargestellt. Sie umfaßt neben den Signaleinrichtungen des Fahrzeugs auch Eingänge für die Bedienelemente, wie etwa Fahrhebel, Fahrtrichtungsanzeiger usw., sowie Ein- und Ausgänge für die Steuer- und Regelelektronik des Antriebsmotors 3.

Ein von der hydrostatischen Kolbenmaschine 7 gespeistes Leitungssystem 6 führt durch einen Drehkranz 8, der den Oberwagen 1 mit dem Unterwagen 2 verbindet, in den Unterwagen 2 und verbindet so einen Hydromotor 7 mit der hydrostatischen Kolbenmaschine 4. Das Leitungssystem 6 kann neben den Arbeitsdruckleitungen für den Fahrantrieb auch eine oder mehrere Steuerleitungen sowie zusätzliche Druckleitungen und eine Tankleitung zur Betätigung einer Lenkeinrichtung aufweisen. Die Steuerleitungen dienen beispielsweise der Einstellung eines Schwenkwinkels des Hydromotors 7. Die Abtriebswelle des Hydromotors 7 ist über eine Kardanwelle und ein nicht dargestelltes Verteilergetriebe mit zumindest einer Achse des Fahrzeugs verbunden (Beispiel Radbagger).

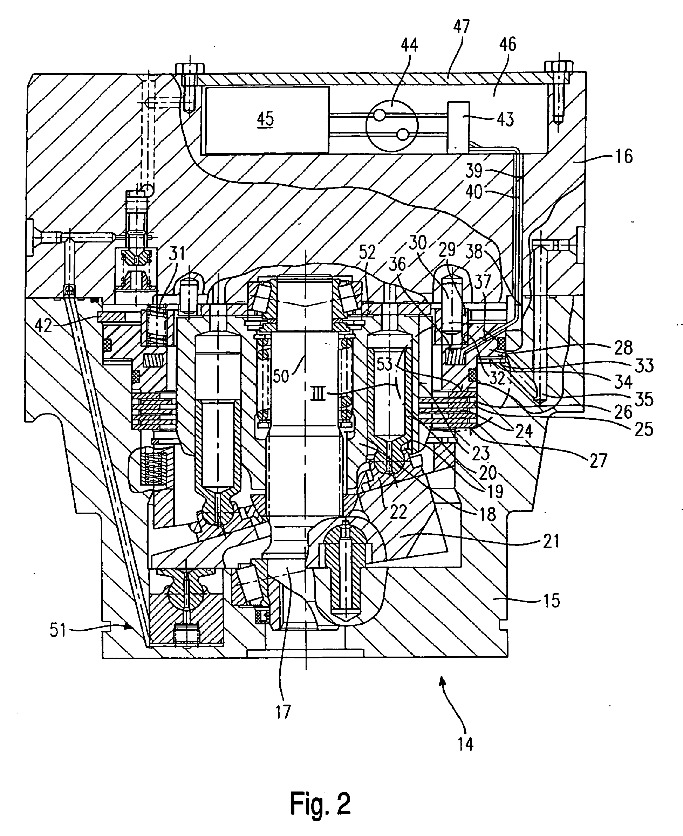

Der Hydromotor 7, der unter Bezugnahme auf die Fig. 2 - 5 ausführlich beschrieben wird, weist einen integrierten Generator auf, dessen Anschlußleitungen mit einem Kondensator 10 verbunden sind. Der Kondensator 10 dient als Zwischenspeicher der von dem integrierten Generator erzeugten elektrischen Energie. Damit ist es möglich, auch während eines kurzfristigen Anhaltens des Hydromotors 7 ausreichend elektrische Energie zu Verfügung zu haben, um die Stromversorgung der elektrischen Anlage 12a des Unterwagens 2 sicherzustellen. Zur elektrischen Anlage 12a des Unterwagens 2 gehören z. B. Drehzahlsensoren, Temperatur- sowie Druckfühler oder elektrische Schaltventile, welche in der Zeichnung allgemein als Sensoren 13 dargestellt sind.

Weiterhin umfaßt die elektrische Anlage 12a des Unterwagens 2 eine Sende- und/oder Empfangseinrichtung 11a, welche mit einer in der elektrischen Anlage 12b des Oberwagens 1 angeordneten zweiten Sende- und/oder Empfangseinrichtung 11b kommuniziert. Die Kommunikation zwischen der Sende- und/oder Empfangseinrichtung 11a des Unterwagens 2 und der zweiten Sende- und/oder Empfangsvorrichtung 11b des Oberwagens 1 erfolgt durch die Übertragung von Funksignalen, wobei vorzugsweise das Bluetooth-Verfahren eingesetzt wird. Durch die Funkverbindung zwischen den elektrischen Anlagen 12a und 12b des Unterwagens 2 bzw. des Oberwagens 1 ist es möglich, die Werte, welche in den Sensoren 13 erfaßt werden, z. B. in der Armaturentafel des Führerhauses des Oberwagens 1 anzuzeigen und so dem Fahrzeugführer mitzuteilen. Bei der Bluetooth Technologie kann die Information, (z. B. Wirkungsgrad Überwachung, Serviceintervalle, Zykluszeitenstatistik) auch weitergesendet werden und woanders verarbeitet werden.

Zur Informationsübermittlung an den Fahrzeugführer ist es ausreichend, die Sende- und/oder Empfangseinrichtung 11a des Unterwagens als reine Sendevorrichtung auszubilden, welche Maßsignale an die Sende- und/oder Empfangseinrichtung 11b, welche als reine Empfangseinrichtung ausgebildet ist, übermittelt. Wird die Funkverbindung bidirektional ausgeführt, so ist es zudem möglich, zwischen der Sende-und/oder Empfangseinrichtung 11b des Oberwagens 1 und der Sende- und/oder Empfangsvorrichtung 11a des Unterwagens 2 Steuerbefehle zu übertragen. So kann die Änderung eines Fahrbefehls durch den Fahrzeugführer im Unterwagen 2 durch direkte Betätigung von Schaltventilen umgesetzt werden. Die Anzahl der durch den Drehkranz 8 durchzuführenden hydraulischen Leitungen kann damit reduziert werden, Damit sinkt neben den Herstellungskosten auch die Gefahr einer Leckage im Bereich der drehbaren Leitungsverbindung.

In Fig. 2 ist ein bevorzugtes Ausführungsbeispiel eines Hydromotors 7 eines hydrostatischen angetriebenen Fahrzeugs dargestellt. Das Gehäuse des Hydromotors 7 besteht aus einem ersten Gehäuseteil 15 und einem zweiten Gehäuseteil 16. In dem ersten Gehäuseteil 15 ist eine Abtriebswelle 17 drehbar gelagert. Eine Zylindertrommel 18 ist verdrehgesichert auf der Abtriebswelle 17 angeordnet. Die Zylindertrommel 18 weist um ihre Mittelachse 50 herum angeordnet mehrere parallel zur Mittelachse 50 ausgerichtete Zylinderbohrungen 19 auf. In den Zylinderbohrungen 19 sind Kolben 20 angeordnet, welche mit der Zylinderbohrung 18 zu einem Zylinderraum zusammenwirken. Die Kolben 20 sind hohl ausgeführt und weisen an ihrer von dem Zylinderraum abgewandten Seite eine Kugelgelenkverbindung mit einem Gleitschuh 22 auf, wobei sich der Gleitschuh 22 auf einer Schrägscheibe 21 abstützt. Der Neigungswinkel der Schrägscheibe 21 bezüglich der Mittelachse 50 der Zylindertrommel 18 ist mit Hilfe einer druckbetätigten Verstellvorrichtung 51 einstellbar, wodurch sich der Hub der Kolben 20 und somit das Schluckvolumen des Hydromotors 7 einstellen läßt.

An dem äußeren Umfang der Zylindertrommel 18 sind über ihren Umfang verteilt Außennuten 23 in die Mantelfläche der Zylindertrommel 18 eingebracht. Die Außennuten 23 erstrecken sich in Längsrichtung der Zylindertrommel 18 und treten zumindest auf der von der Schrägscheibe 21 abgewandten Seite der Zylindertrommel 18 stirnseitig aus. Im Eingriff mit den Außennuten 23 sind an der Zylindertrommel 18 erste Bremsscheiben 24 angeordnet. Die im dargestellten Ausführungsbeispiel 3 ersten Bremsscheiben 24 weisen an ihrem inneren Umfang eine mit der Geometrie der Außennut 23 korrespondierende Verzahnung auf, mit der die ersten Bremsscheiben 24 von der Stirnseite 52 her auf die Zylindertrommel 18 aufgeschoben sind. Jede der drei ersten Bremsscheiben 24 ist zwischen zweiten Bremsscheiben 25 angeordnet, wobei die zweiten Bremsscheiben 25 an ihrem äußeren Umfang eine Verzahnung aufweisen, mit der sie sich im Eingriff mit Innennuten 26 befinden, die in das erste Gehäuseteil 15 eingebracht sind.

Der Durchmesser der kreisförmigen Außengeometrie der ersten Bremsscheiben 24 ist größer als der Durchmesser der kreisförmigen Innengeometrie der zweiten Bremsscheiben 25, so daß sich eine kreisscheibenförmige Kontaktfläche zwischen den jeweils benachbarten ersten und zweiten Bremsscheiben 24 und 25 ergibt. Die ersten und zweiten Bremsscheiben 24 bzw. 25 sind in axialer Richtung nicht in dem ersten Gehäuseteil 15 fixiert, wobei durch eine radiale Stufung 27 in dem ersten Gehäuseteil 15 eine Anlagefläche in Richtung der Schrägscheibe 21 für die äußerste zweite Bremsscheibe 25 ausgebildet ist. Auf der von der radialen Stufung 27 abgewandten Seite des Satzes erster und zweiter Bremsscheiben 24 und 25 ist ein Bremsring 28 angeordnet, welcher sich in axialer Richtung in Anlage mit der Stirnfläche 53 einer zweiten Bremsscheibe 25 befindet.

Der Bremsring 28 weist an seinem äußeren Umfang eine radiale Stufe auf,welche mit einer zweiten radialen Stufe 33 des ersten Gehäuseteiles 15 korrespondiert. Durch die radiale Stufung des Bremsrings 28 ist an dem Bremsring 28 eine Kolbenfläche 34 ausgebildet, welche zusammen mit der zweiten radialen Stufung des ersten Gehäuseteils 15 einen Druckraum ausbildet. In den Druckraum mündet eine Steuerleitung 35, welche als Bohrung in dem ersten Gehäuseteil 15 eingebracht ist.

Auf seiner von der Schrägscheibe 21 abgewandten Seite weist der Bremsring 28 mehrere über den Umfang verteilte Ausnehmungen 32 auf, in welche Führungshülsen 29 eingesetzt sind. In das zweite Gehäuseteil 16 sind Führungsstifte 30 eingepreßt, auf welchen ein Teil der Führungshülsen 29 geführt ist und damit der Bremsring 28 axial verschieblich gelagert ist. In dem anderen Teil der Führungshülsen 29 ist anstelle des Führungsstiftes 30 je eine Druckfeder 31 angeordnet, welche sich an dem Bremsring 28 bzw. der Stirnseite des zweiten Gehäuseteils 16 auf der gegenüberliegenden Seite abstützt. Der Bremsring 28 wird damit in axialer Richtung mit einer Kraft beaufschlagt, welche ihn in Richtung der Schrägscheibe 21 drückt.

Zwischen den ersten und zweiten Bremsscheiben 24 und 25 wird durch die von dem Bremsring 28 ausgeübte Axialkraft eine Flächenpressung erzeugt. Bei sich drehender Zylindertrommel 18 und der damit verbundenen ersten Bremsscheiben 24 wird durch die Verzahnungen der ersten und zweiten Bremsscheiben 24 und 25 mit dem ersten Gehäuseteil 15 bzw. der Zylindertrommel 18 dadurch eine Bremskraft auf die Zylindertrommel 18 erzeugt.

Über die Steuerleitung 35 ist in dem Druckraum ein Druck erzeugbar, durch den über die Stirnfläche 34 eine Kraft auf den Bremsring 28 wirkt, der der Kraft der Druckfedern 31 entgegengerichtet ist. Diese Gegenkraft kann soweit erhöht werden, bis von dem Bremsring 28 keine Kraft in axialer Richtung auf die ersten und zweiten Bremsscheiben 24 und 25 übertragen wird. Die Flächenpressung zwischen den ersten und zweiten Bremsscheiben 24 und 25 wird verringert und die Bremskraft auf die Zylindertrommel 18 reduziert. Zur Begrenzung des axialen Hubes des Bremsrings 28 ist in einer Nut des ersten Gehäuseteils 15 eine Anschlagscheibe 42 angeordnet.

In dem Bremsring 28 ist eine Wicklung 36 aus einem elektrisch leitenden Material eingebracht. Die Anschlußleitungen 40 der Wicklungen 36 werden durch eine in die Stirnseite des Bremsrings eingebrachte Nut 37 und eine in dem ersten Gehäuseteil 15 angeordnete korrespondierende zweite Nut 38 herausgeführt. Durch die Verlegung der Anschlußleitungen in einer ersten und zweiten Nut 37 und 38 ist eine Möglichkeit zur axialen Bewegung der Anschlußleitungen 40 relativ zu dem Bremsring 28 und dem ersten Gehäuseteil 15 gegeben. Die axiale Verschiebung des Bremsrings 28 in dem ersten Gehäuseteil 15, bei einer Betätigung oder einem Lösevorgang der Lamellenbremse, führt damit nicht zu einem Knicken der Anschlußleitungen 41 an der Stelle der Relativbewegung. Bei einer ausreichend großen Dimensionierung der zweiten Nut 38 kann die Anschlußleitung 41 in dem Bremsring 28 auch vollständig umspritzt sein. Die Verlegung der Anschlußleitung 41 erfolgt dann in einer entsprechend großzügig bemessenen Schlaufe in der zweiten Nut 38.

An der Zylindertrommel 18 ist ein Magnetkörper 41 angebracht, dessen Position in axialer Richtung mit der Position der Wicklung 36 korrespondiert, so daß bei Drehung der Zylindertrommel 18 durch das sich ändernde Magnetfeld in der Wicklung 36 eine elektrische Spannung induziert wird. Die Anschlußleitungen 40 sind durch eine Bohrung 39 in dem zweiten Gehäuseteil 16 einem Regler 43 zugeführt, durch den die Spannung, welche mit der Drehzahl der Zylindertrommel 18 variiert, auf einen Maximalwert begrenzt wird. Zur Speicherung der erzeugten Energie ist mit dem Regler 43 ein Elektrolytkondensator 44 verbunden, aus dem die Versorgung der weiteren elektrischen Anlage 45 sichergestellt wird. Durch den Regler 43 und den Elektrolytkondensator 44 wird der weiteren elektrischen Anlage 45 eine Gleichspannung konstanter Größe zugeführt. Die Pufferung kann anstatt mit einem Kondensator auch mit einem Akkumulator erfolgen.

Zur Aufnahme des Reglers 43 des Elektrolytkondensators 44 sowie der elektrischen Anlage 45 ist in einer Außenseite des zweiten Gehäuseteils 16 ein Raum 46 angeordnet, der mit einem Deckel 47 verschließbar ist, wobei der Deckel 47 für Arbeiten an der elektrischen Anlage 45 abnehmbar ist. Bei Verwendung eines Funkübertragungssystems mit der Bluetooth Technologie ist eine Miniaturisierung der Komponenten einfach möglich, so daß die Sende- und/oder Empfangseinrichtung als Teil der elektrischen Anlage 45 ausgeführt sein kann.

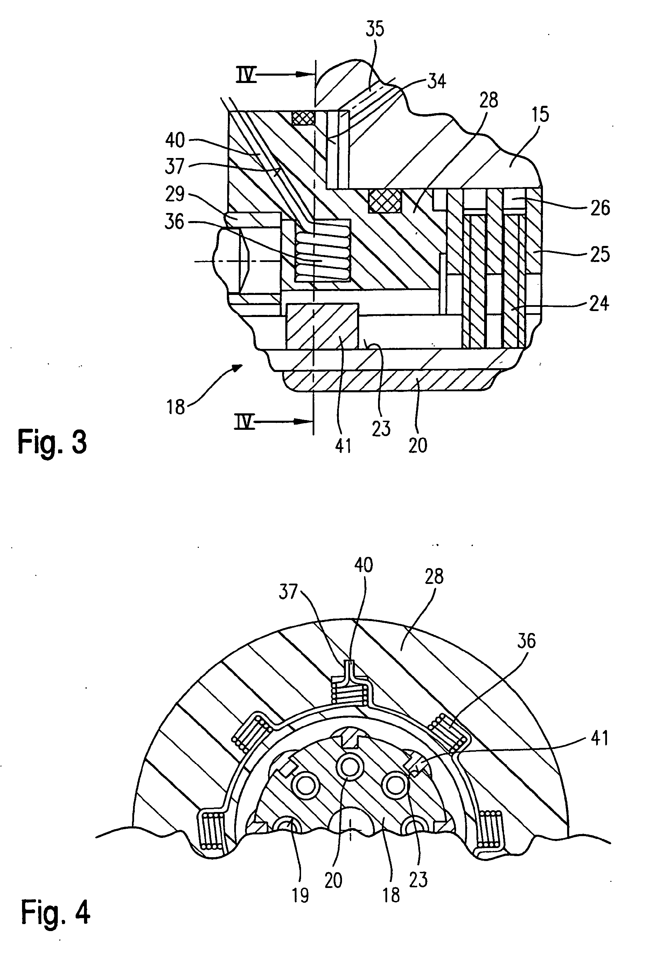

Fig. 3 zeigt eine vergrößerte Darstellung im Ausschnitt 3 der Fig. 3. Die Anschlußleitungen 40 der Wicklungen 36 werden entlang der ersten Nut 37 aus dem Bremsring 28 herausgeführt. Der Bremsring 28 ist vorzugsweise aus einem Kunststoff hergestellt, so daß die Wicklung 36 durch Umspritzen in dem Bremsring 28 fixiert werden kann. Um eine vollständige Reduzierung des Druckvolumens zu verhindern, sind an der Stirnfläche 34 des Bremsrings 28 Stege 34a angebracht. In der Außennut 23 der Zylindertrommel 18 ist der Magnetkörper 41 angeordnet.

Eine Schnittdarstellung entlang der Linie IV-IV der Fig. 3 ist in Fig. 4 dargestellt. In dem Bremsring 28 sind über den Umfang verteilt mehrere Wicklungen 36 angeordnet, wobei die Wicklungen 36 zur Erhöhung der von dem wechselnden Magnetfeld durchdrungenen Anzahl von Wicklungen 36 in Serie angeordnet sind. Entsprechend der Anzahl von Wicklungen 36 sind in den Außennuten 23 der Zylindertrommel 18 mehrere Magnetkörper 41 angeordnet. Die Magnetkörper 41 können zur Fixierung beispielsweise in die Außennuten 23 eingepreßt sein.

Um die Montage und die Befestigung der einzelnen Magnetkörper 41 auf der Zylindertrommel 18 zu vereinfachen, können die Magnetkörper 41 ebenfalls in einem Kunststoffring vergossen sein, der einteilig auf die Zylindertrommel 18 aufschiebbar ist.

Ferner ist es möglich, durch mehrere voneinander getrennte Wicklungssysteme, welche jedoch gemeinsam in einem Bremsring 28 angeordnet werden, eine mehrphasige Spannungserzeugung auszubilden und durch unterschiedliche Anzahlen von Wicklungen in den einzelnen Wicklungssträngen unterschiedliche Maximalspannungen zu erzeugen, wovon eine Phase durch einen Elektrolytkondensator 44 gepuffert sein kann, während die zweite nur zur Versorgung von Aggregaten eingesetzt wird, deren Funktion nur im Fahrbetrieb erforderlich ist.

## Patentansprüche

1. Hydrostatische Kolbenmaschine, mit einem Gehäuse (15, 16) und einer darin drehbar gelagerten Zylindertrommel (18), wobei in der hydrostatischen Kolbenmaschine (7) zumindest eine elektrisch leitfähige Wicklung (36) verdrehgesichert in dem Gehäuse (15) angeordnet ist und ein permanentmagnetischer Körper (41) fest mit der Zylindertrommel (18) verbunden ist, wobei das Magnetfeld des permanentmagnetischen Körpers (41) bei Rotation der Zylindertrommel (18) ein sich änderndes Magnetfeld in der Wicklung (36) induziert,
**dadurch gekennzeichnet,**
**daß** die zumindest eine Wicklung (36) in einen zwischen der Zylindertrommel (18) und dem Gehäuse (15) angeordneten Ring (28) eingebracht ist und der Ring (28) verdrehgesichert in dem Gehäuse (15) angeordnet ist.

2. Hydrostatischen Kolbenmaschine nach Anspruch 1,
**dadurch gekennzeichnet,**
**daß** der zwischen der Zylindertrommel (18) und dem Gehäuse (15) angeordnete Ring (28) aus Kunststoff ist und die zumindest eine Wicklung (36) in dem Ring (28) eingegossen ist.

3. Hydrostatische Kolbenmaschine nach Anspruch 1 oder 2,
**dadurch gekennzeichnet,**
**daß** in radialer Richtung zwischen der Zylindertrommel (18) und dem Gehäuse (15) eine Bremsvorrichtung ausgebildet ist, die aus mehreren axial aufeinanderfolgend angeordneten Bremsscheiben (24, 25) besteht, die durch Formschluß wechselweise bezüglich des Gehäuse (15) bzw. der Zylindertrommel (18) verdrehgesichert sind und
**daß** der Ring (28) in axialer Richtung verschieblich in dem Gehäuse (15) angeordnet ist und die Bremsscheiben (24, 25) durch den Ring (28) mit einer axialen Kraft zur Erzeugung einer bremsenden Flächenpressung zwischen den Bremsscheiben (24, 25) beaufschlagbar sind.

4. Hydrostatische Kolbenmschine nach einem der Ansprüche 1 bis 3,
**dadurch gekennzeichnet,**
**daß** der zumindest eine permanentmagnetische Körper (41) in einer Längsnut (23) der Zylindertrommel (18) fixiert ist.

5. Hydrostatische Kolbenmaschine nach einem der Ansprüche 1 bis 4,
**dadurch gekennzeichnet,**
**daß** an Anschlußleitungen (40) der Wicklungen (36) ein Zwischenspeicher (10, 44) zum Speichern der elektrischen Energie angeschlossen ist.

## Claims

1. Hydrostatic piston machine, with a housing (15, 16) and a cylinder drum (18) which is rotatably mounted therein, wherein at least one electrically conductive winding (36) is disposed in the housing (15) so as to be protected against twisting in the hydrostatic piston machine (7) and a permanent magnetic body (41) is firmly connected to the cylinder drum (18), wherein the magnetic field of the permanent magnetic body (41) induces a changing magnetic field in the winding (36) upon rotation of the cylinder drum (18),
**characterised in**
**that** the at least one winding (36) is introduced into a ring (28) disposed between the cylinder drum (18) and the housing (15), and the ring (28) is disposed in the housing (15) so as to be protected against twisting.

2. Hydrostatic piston machine according to Claim 1,
**characterised in**
**that** the ring (28) disposed between the cylinder drum (18) and the housing (15) consists of plastics material and the at least one winding (36) is cast in the ring (28).

3. Hydrostatic piston machine according to Claim 1 or 2,
**characterised in**
**that** a braking device is formed in the radial direction between the cylinder drum (18) and the housing (15), which device consists of a plurality of brake discs (24, 25) which are disposed axially in succession and protected against twisting through a positive engagement alternately in relation to the housing (15) and the cylinder drum (18), and
**that** the ring (28) is disposed so as to be displaceable in the axial direction in the housing (15) and the brake discs (24, 25) can be subjected by the ring (28) to an axial force in order to produce a braking surface pressure between the brake discs (24, 25).

4. Hydrostatic piston machine according to any one of Claims 1 to 3,
**characterised in**
**that** the at least one permanent magnetic body (41) is fixed in a longitudinal groove (23) of the cylinder drum (18).

5. Hydrostatic piston machine according to any one of Claims 1 to 4,
**characterised in**
**that** an intermediate store (10, 44) for storing the electrical energy is connected to connection lines (40) of the windings (36).

## Revendications

1. Machine à pistons hydrostatique, comprenant un carter (15, 16) et un tambour cylindrique (11) monté en rotation dans celui-ci, avec au moins un enroulement électriquement conducteur (36) agencé dans la machine à pistons hydrostatique (7) dans le carter (15) avec sécurité antirotation, et un corps magnétique permanent (41) est relié fermement au tambour cylindrique (18), le champ magnétique du corps magnétique permanent (41) induisant un champ magnétique variable dans l'enroulement (36) lors de la rotation du tambour cylindrique (18),
**caractérisée en ce que**
ledit au moins un enroulement (36) est introduit dans une bague (28) agencée entre le tambour cylindrique (18) et le carter (15), et la bague (28) est agencée dans le carter (15) avec sécurité antirotation.

2. Machine à pistons hydrostatique selon la revendication 1,
**caractérisée en ce que** la bague (28) agencée entre le tambour cylindrique (18) et le carter (15) est en matériau synthétique, et ledit au moins un enroulement (36) est surmoulé dans la bague (28).

3. Machine à pistons hydrostatique selon la revendication 1 ou 2,
**caractérisée en ce que**, en direction radiale entre le tambour cylindrique (18) et le carter (15), est agencé un dispositif de freinage, composé de plusieurs disques de frein (24, 25) agencés axialement les uns à la suite des autres, qui sont montés avec sécurité antirotation par coopération de formes alternativement par rapport au carter (15) et par rapport au tambour cylindrique (18), et
**en ce que** la bague (28) est agencée à déplacement dans le carter (15) en direction axiale, et les disques de frein (24, 25) sont susceptibles d'être sollicités par la bague (28) sous une force axiale pour générer une pression de surface à effet de freinage entre les disques de frein (24, 25).

4. Machine à pistons hydrostatiques selon l'une des revendications 1 à 3,
**caractérisée en ce que** ledit au moins un corps magnétique permanent (41) est fixé dans une gorge longitudinale (23) du tambour cylindrique (18).

5. Machine à pistons hydrostatiques selon l'une des revendications 1 à 4,
**caractérisée en ce qu'**un accumulateur intermédiaire (10, 44) est branché à des lignes de branchement (40) des enroulements (36) pour accumuler l'énergie électrique.
